Europäisches Patentamt

European Patent Office

Office européen des brevets

(19)

(11) **EP 1 175 622 B1**

(12) **FASCICULE DE BREVET EUROPEEN**

(45) Date de publication et mention
de la délivrance du brevet:
**16.03.2005 Bulletin 2005/11**

(21) Numéro de dépôt: **00925358.4**

(22) Date de dépôt: **28.04.2000**

(51) Int Cl.⁷: **G01P 13/02**, G01P 5/14

(86) Numéro de dépôt international:
**PCT/FR2000/001162**

(87) Numéro de publication internationale:
**WO 2000/067039 (09.11.2000 Gazette 2000/45)**

(54) **SONDE MULTIFONCTIONS FIXE POUR AERONEF**

FESTE MULTIFUNKTIONSSONDE FÜR LUFTFAHRZEUG

FIXED MULTIFUNCTION SENSOR FOR AIRCRAFT

(84) Etats contractants désignés:
**DE FR GB**

(30) Priorité: **30.04.1999 FR 9905545**

(43) Date de publication de la demande:
**30.01.2002 Bulletin 2002/05**

(73) Titulaire: **THALES AVIONICS S.A.**
**78140 Vélizy Villacoublay (FR)**

(72) Inventeur: **CHOISNET, Joel,**
**Thomson-CSF Prop. Int., Dépt.**
**F-94117 Arcueil Cedex (FR)**

(74) Mandataire: **Guérin, Michel**
**THALES Intellectual Property,**
**31-33 avenue Aristide Briand**
**94117 Arcueil Cédex (FR)**

(56) Documents cités:
DE-C- 19 640 606    FR-A- 1 300 142
US-A- 3 079 758     US-A- 4 096 744
US-A- 5 628 565

EP 1 175 622 B1

**Description**

La présente invention concerne une sonde multifonctions destinée à mesurer les pressions statique et totale, ainsi que l'incidence de l'écoulement d'un fluide à proximité d'un aéronef. La sonde est particulièrement destinée à mesurer les paramètres de l'écoulement de l'air à proximité d'un avion.

La pression statique est un paramètre très important pour la sécurité d'un avion. Une norme internationale établit une correspondance entre la pression statique et l'attitude. Cette correspondance est utilisée pour associer de manière unique un aéronef à une altitude en lui attribuant une valeur de pression statique à respecter lors de son vol.

La pression totale n'est pas exploitée en tant que telle, mais elle permet de déterminer la pression dynamique en calculant la pression différentielle entre la pression totale et la pression statique. La pression dynamique est un paramètre très important car elle permet de déterminer la vitesse de l'écoulement de l'air ; la vitesse de l'écoulement de l'air intervenant quant à elle dans le calcul de la portance de l'avion.

Les mesures de pression sont effectuées par l'intermédiaire de prises de pression. Les premières sondes connues étaient équipées d'une seule prise de pression. Cette limitation imposait l'utilisation de plusieurs sondes pour pouvoir effectuer les différentes mesures de pression.

La configuration habituellement retenue comprend :

- une sonde de pression statique pour mesurer la pression statique locale Ps
- une sonde de pression totale pour mesurer la pression totale Pt
- et une girouette pour mesurer l'incidence locale $\alpha$.

Avec une telle configuration, le calcul des paramètres, pression statique Ps, pression totale Pt et incidence locale $\alpha$, nécessite la connaissance précise d'une part, des caractéristiques des trois sondes, et d'autre part, du champ aérodynamique de l'avion aux points de position des sondes sur le fuselage. En outre, chaque sonde nécessite son système de dégivrage.

Pour remédier à ces inconvénients, l'homme de l'art peut recourir à une sonde multifonctions. Une sonde multifonctions permet avantageusement de mesurer les paramètres précédents en un même point de l'avion. L'optimisation de la position de la sonde facilite les calculs. L'utilisation d'une sonde multifonctions permet de réduire le nombre de sondes, et par voie de conséquence, elle permet de réduire la puissance de réchauffage nécessaire pour le dégivrage. Il existe différents types de sonde multifonctions.

Un premier type regroupe les sondes multifonctions mobiles. Une sonde de ce type, telle que décrite dans le brevet US 3 079 758, comprend une partie mobile, généralement appelée girouette, qui se positionne dans la direction du flux d'air et qui porte des prises de pression statique et totale. La fabrication de ce type de sondes présente des difficultés importantes. La girouette impose un lien mécanique complexe avec la partie fixe de la sonde. Le lien doit permettre la rotation de la girouette tout en assurant une continuité des conduites de pression entre la girouette et la partie fixe, or cette continuité ne doit pas présenter de fuites. La réalisation de l'étanchéité est donc difficile car elle doit être compatible de la rotation de la girouette.

Un second type regroupe les sondes multifonctions fixes. Une sonde typique est décrite dans le brevet US 4 096 744. Cette sonde comprend des prises de pression réparties à différents endroits de la sonde. Cette répartition donne la possibilité, après calcul, d'accéder aux informations altitude, vitesse et incidence. Mais cette sonde comporte une prise de pression totale Pt au bout avant de la sonde ; cette prise est souvent désignée par l'appellation « Pitot ». La prise Pitot rend le nez de la sonde fragile. Le brevet US 5 628 565 décrit une sonde élaborée qui est capable, simultanément, de mesurer différentes pressions et de mesurer la température du flux d'air. Mais cette sonde est aussi équipée d'une prise Pitot qui rend le nez de la sonde fragile.

L'état de la technique le plus proche est constitué par le brevet DE 196 40 606. Une variante d'exécution est connue du brevet FR 1 300 142.

Un but de l'invention est de fournir une sonde multifonctions fixe pour aéronef qui ne présente pas l'inconvénient ci-dessus rappelé.

A cet effet, l'invention a pour objet une sonde multifonctions fixe pour aéronef ayant une partie avant fermée et ayant au moins trois prises de pression réparties dans différentes sections en des points déterminés du corps de la sonde. La sonde multifonctions fixe selon l'invention permet de mesurer les paramètres de l'écoulement du fluide en mouvement par rapport à la sonde. Dans ce but, elle comprend :

- un corps à symétrie de révolution autour d'un axe longitudinal, fermé par une calotte arrondie, le corps étant placé dans l'écoulement,
- au moins trois prises de pression situées en des points déterminés du corps et réparties dans différentes sections pour prendre une première pression, une deuxième pression et une troisième pression,
- des moyens de mesure de pression associés aux prises de pression pour mesurer au moins autant de pressions P1,..., Pn que de prises de pression,
- des moyens de calcul pour calculer l'incidence locale $\alpha$ de l'écoulement en exprimant un rapport déterminé de pressions mesurées en fonction de l'incidence locale $\alpha$ sous la forme:

$$\frac{P1 - P2}{P1 + P2} = \frac{A + B.\cos 2\alpha + C.\sin 2\alpha}{D + E.\cos 2\alpha + F.\sin 2\alpha}$$

avec A, B, C, D, E, F des constantes dépendant uniquement des coordonnées des prises de pression, la position déterminée des prises de pression étant telle que l'expression du rapport en fonction de l'incidence locale $\alpha$ est quasi linéaire,
et pour calculer la pression totale Pt de l'écoulement au niveau de la sonde, la pression statique à l'infini amont de la sonde $Ps_\infty$ et la pression dynamique $Pt-Ps_\infty$ à partir des coefficients de pression kP des prises de pression.

Grâce à l'absence de prise de pression Pitot, une sonde selon l'invention est plus robuste qu'une sonde multifonctions fixe équipée d'une telle prise. En outre, l'absence d'une prise Pitot permet de libérer de la place pour l'installation d'un circuit de réchauffage ce qui permet d'améliorer le dégivrage du bout de la sonde.

La structure fixe de la sonde facilite le contrôle de l'intégrité de la sonde avant le vol ainsi que la transmission de l'énergie de réchauffage et des pressions pneumatiques. La structure de la sonde permet aussi bien une installation au nez de l'avion, de manière similaire à l'installation d'une perche de nez, qu'une installation le long du fuselage, par l'intermédiaire d'un mât faisant office de support et par l'intermédiaire d'une plaquette de fixation.

Selon un premier mode de réalisation de l'invention, la sonde comprend trois prises de pression. Les prises de pression sont associées à des moyens de mesure de pression et à des moyens de calcul. La sonde permet de restituer l'incidence locale, la pression totale et la pression statique de l'écoulement aérodynamique dans lequel elle est placée. De manière avantageuse, la sonde ne comporte pas de prise de pression totale.

Selon un second mode de réalisation de l'invention, la sonde comprend une quatrième prise de pression associée à des moyens de mesure de pression. Une telle sonde permet aussi de restituer les paramètres ci-dessus listés (incidence locale, pression totale et pression statique de l'écoulement), mais avec une sécurisation des informations que ne permet pas le premier mode. Une panne sur l'une des prises de pression, ou sur l'un des moyens de mesure de pression, peut être détectée et signalée à l'issue d'une comparaison entre les différentes valeurs calculées à partir des différentes mesures. Comme dans le premier mode, la sonde ne comporte pas de prise de pression totale.

L'invention sera bien comprise et ses avantages et autres caractéristiques ressortiront, lors de la description suivante présentée à titre d'illustration non limitative. La description est faite en regard des figures annexées qui représentent:

- la figure 1, une représentation schématique d'une sonde multifonctions fixe selon l'invention,
- la figure 2, une représentation schématique de la disposition des prises de pression d'une sonde selon l'invention,
- la figure 3, les composantes de la vitesse de l'écoulement en un point de la sonde,
- la figure 4, une disposition particulière des prises de pression du premier mode de réalisation d'une sonde selon l'invention,
- la figure 5, une disposition particulière des prises de pression du second mode de réalisation d'une sonde selon l'invention,
- la figure 6, une sonde multifonction fixe selon l'invention comportant en outre des moyens de mesure de la température totale.

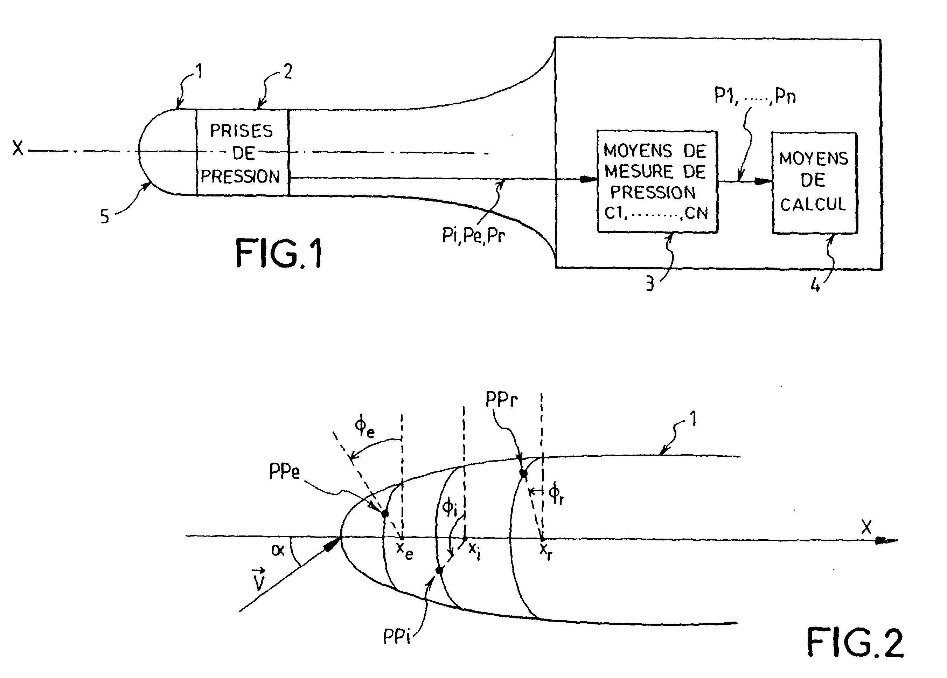

La figure 1 représente schématiquement une sonde multifonctions fixe selon l'invention. La sonde comprend un corps 1, des prises de pression 2, des moyens de mesure de pression 3 et des moyens de calcul 4.

Le corps 1 présente un profil ayant une symétrie de révolution autour d'un axe longitudinal X. Le profil est tel que l'écoulement du fluide ne présente pas de décollement dans la plage d'incidence utile. Cette plage peut s'étendre par exemple entre +/- 40° d'incidence. Le corps est fermé par une calotte 5 arrondie. Le corps est placé dans l'écoulement du fluide. La sonde comporte au moins trois prises de pression 2, chaque prise de pression prenant une pression Pe, Pi, Pr. Les prises de pression sont disposées sur le corps et communiquent par des conduits hermétiques avec des moyens de mesure de pression 3. Les moyens de mesure de pression sont associés aux prises de pression 2 pour mesurer au moins autant de pressions que de prises de pression 2. Les moyens de mesure de pression consistent en des capteurs de pression différentielle ou absolue C1, ..., Cn. Les sorties P1, ..., Pn des capteurs sont exploitées par les moyens de calcul 4. Les moyens de calcul 4 peuvent comprendre un processeur, ou un microcontrôleur, pour effectuer les calculs des paramètres de l'écoulement du fluide, à partir des valeurs de pression mesurées P1, ..., Pn.

La figure 2 représente schématiquement, sur un diagramme, la disposition des prises de pression sur le corps 1 d'une sonde selon l'invention. La sonde comprend au moins trois prises de pression PPe, PPi, PPr telles que :

PPe est caractérisée par son abscisse $x_e$ et son angle $\phi_e$
PPi est caractérisée par son abscisse $x_i$ et son angle $\phi_i$
PPr est caractérisée par son abscisse $x_r$ et son angle $\phi_r$

Chaque prise de pression a un coefficient de pression kP qui s'exprime suivant les relations:

$$kP = \frac{P - Ps_\infty}{Pt - Ps_\infty} \qquad (1)$$

$$kP = 1 - V^2 \qquad (2)$$

Avec:

$Ps_\infty$ la pression statique à l'infini amont de la sonde,
P la pression à la prise considérée,
Pt la pression totale de l'écoulement au niveau de la sonde,
V la vitesse de l'écoulement au niveau de la prise considérée pour une vitesse à l'infini amont de la sonde égale à l'unité.

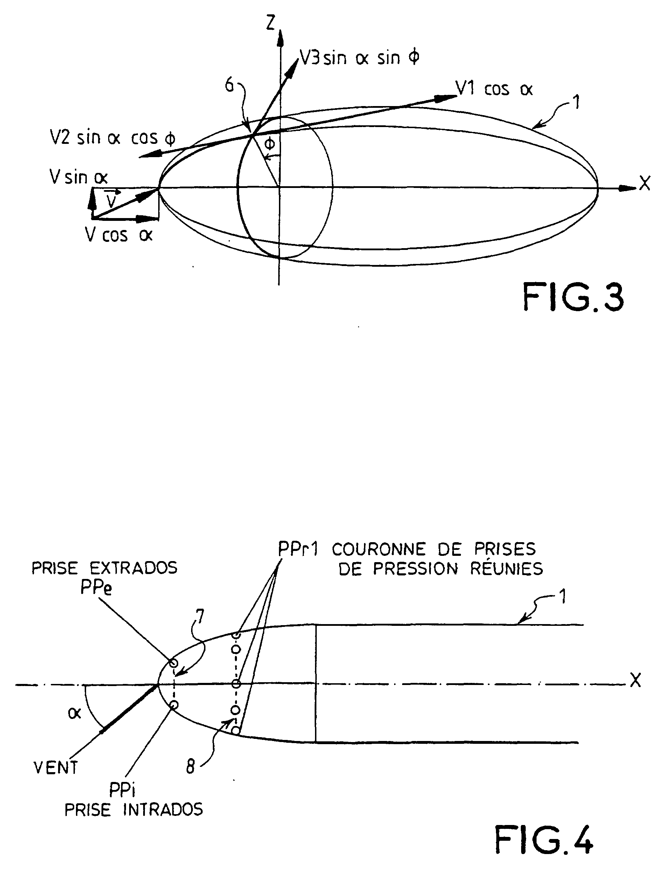

Pour une prise de pression considérée, les composantes de la vitesse de l'écoulement du fluide sont représentées sur la figure 3. V est la vitesse de l'écoulement du fluide au niveau de la prise de pression considérée 6 pour une vitesse à l'infini amont égale à l'unité. L'illustration représente une sonde dont le profil du corps 1 est simulé par une ellipse. L'axe X des abscisses correspond à l'axe longitudinal de la sonde. L'écoulement du fluide, de vitesse $\vec{V}$ et d'angle d'incidence $\alpha$, peut se décomposer en deux écoulements, un écoulement longitudinal et un écoulement transversal. A l'écoulement longitudinal correspond une vitesse amont parallèle à l'axe de symétrie X de la sonde et de module $V\cos\alpha$. La vitesse induite $\vec{V}1\cos\alpha$, au point considéré de la surface, est tangente à la méridienne en ce point. A l'écoulement transversal correspond une vitesse amont perpendiculaire à l'axe de symétrie X de la sonde et de module $V\sin\alpha$. La vitesse induite au point considéré de la surface a une composante, de module $V2\sin\alpha\cos\Phi$, tangente à la méridienne en ce point, et une composante, de module $V3\sin\alpha\sin\Phi$, tangente au cercle au point considéré. $\Phi$ représente la position angulaire du point par rapport au plan d'incidence défini par l'axe de symétrie X de la sonde et la vitesse amont $\vec{V}$ de l'écoulement du fluide. Les valeurs de V1, V2 et V3 dépendent uniquement de l'abscisse du point considéré. La superposition des écoulements longitudinal et transversal permet le calcul de la vitesse V en tout point de la sonde, en particulier à une prise de pression, suivant la relation :

$$V^2 = (V1\cos\alpha + V2\sin\alpha\cos\Phi)^2 + (V3\sin\alpha\sin\Phi)^2 \qquad (3)$$

avec :

$\alpha$ l'angle d'incidence de l'écoulement,
$\Phi$ la position angulaire de la prise de pression par rapport au plan d'incidence,
V1, V2, V3 les composantes de la vitesse au point considéré, les vitesses V1, V2 et V3 sont calculées pour une vitesse infinie amont égale à l'unité. Les composantes de la vitesse V1, V2, V3 ne dépendent que de l'abscisse de la prise de pression. Elles sont calculées suivant une méthode habituelle à partir du profil de la sonde, par exemple suivant la méthode HESS et SMITH.

L'expression (2) du coefficient de pression peut être développée en utilisant les formules : $\cos^2\alpha = \frac{1}{2}(1 + \cos2\alpha)$, $\sin^2\alpha = \frac{1}{2}(1 - \cos2\alpha)$ et $2\sin\alpha.\cos\alpha = \sin2\alpha$ pour exprimer le coefficient sous la forme suivante :

$$kP = 1 - a - b.\cos2\alpha - c.\sin2\alpha \qquad (4)$$

avec a, b et c des constantes qui ne dépendent que de la position de la prise de pression et du profil de la sonde.

Les moyens de mesure de pression associés aux prises de pression mesurent au moins autant de pressions que de prises de pression. Un premier moyen est un capteur différentiel qui mesure P1=Pe-Pr. Un deuxième moyen est un capteur différentiel qui mesure P2=Pi-Pr. Un troisième moyen est un capteur absolu qui mesure P3=Pr. Ceci permet aux moyens de calcul de calculer le rapport $\frac{P1 - P2}{P1 + P2}$ qui peut s'exprimer sous les formes suivantes:

$$\frac{P1 - P2}{P1 + P2} = \frac{(Pe - Pr) - (Pi - Pr)}{(Pe - Pr) + (Pi - Pr)} \tag{5}$$

$$\frac{P1 - P2}{P1 + P2} = \frac{kPe - kPi}{kPe + kPi - 2.k\,Pr} \tag{6}$$

Ce rapport peut s'écrire sous la forme:

$$\frac{P1 - P2}{P1 + P2} = \frac{A + B.\cos 2\alpha + C.\sin 2\alpha}{D + E.\cos 2\alpha + F.\sin 2\alpha} \tag{7}$$

Avec A, B, C, D, E, F des valeurs dépendant uniquement des coordonnées ($x_e$, $x_i$, $x_n$, $\phi_e$, $\phi_i$, $\phi_r$) des prises de pression.

En choisissant convenablement ces coordonnées, il est possible de faire en sorte que A = 0, B = 0 et F=0 et que E/D ait une valeur telle que le rapport $\frac{P1 - P2}{P1 + P2}$ soit quasi linéaire avec l'incidence $\alpha$. Par exemple, pour une variation de $\alpha$ de $\pm 40°$, si E/D = 0,560825 alors l'expression du rapport en fonction de $\alpha$ est linéaire à $10^{-3}$ près.

Le calcul du rapport $\frac{P1 - P2}{P1 + P2}$ permet ainsi de déterminer l'incidence $\alpha$, puis les coefficients de pression kPe, kPi, kPr, puis (Pt-Ps$_\infty$), Ps$_\infty$ et Pt.

Le système n'est cependant pas optimisé, car la variation du rapport $\frac{P1 - P2}{P1 + P2}$ rapportée à la plage d'incidence $\alpha$ utile n'est pas la plus grande possible. Or, ceci est souhaitable pour optimiser la précision des calculs.

La figure 4 représente schématiquement, sur un diagramme, une disposition particulière des prises de pression du premier mode de réalisation d'une sonde selon l'invention. Cette disposition permet une optimisation de la détermination des paramètres de l'écoulement. La position de chacune des trois prises de pression, PPe, PPi et PPr1, est déterminée en fonction du profil du corps 1 de la sonde de manière à ce que :

- PPe est située sur l'extrados de la sonde, dans une première section 7, de préférence perpendiculaire à l'axe de la sonde, et dans le plan d'incidence
- PPi est située sur l'intrados de la sonde, dans la même section que PPe et diamétralement opposée à PPe dans le plan d'incidence et
- la prise PPr1 est constituée d'une couronne de trous communicants entre eux. La couronne est située dans une même section 8 de préférence perpendiculaire à l'axe de la sonde. Les trous sont de préférence régulièrement espacés sur la circonférence de cette section. Lorsque la prise de pression PPr1 comprend huit trous, ceux-ci sont de préférence positionnés à 45° les uns des autres. Cette réalisation particulière correspond à l'illustration de la figure 4.

Les termes extrados et intrados font référence à une installation de la sonde le long du fuselage. Une prise de pression PPe est dite située à l'extrados de la sonde quand elle se trouve dans le plan d'incidence défini par l'axe de la sonde et la vitesse infinie amont de l'écoulement, et du côté opposé au vent pour les incidences positives. Une prise intrados PPi est diamétralement opposée à une prise extrados.

Les prises de pression extrados sont caractérisées par un angle $\Phi$ égal à 0. Les prises de pression intrados sont caractérisées par un angle $\Phi$ égal à $\pi$.

Dans le cas d'une installation sur le nez de l'avion, deux prises de pression supplémentaires peuvent être disposées dans la première section dans un plan perpendiculaire au plan contenant les prises intrados et extrados. Les quatre prises de pression de la première section sont de préférence équidistantes les unes des autres.

La connaissance des composantes de la vitesse permet de calculer les coefficients de pression kPe, kPi et kPr1 qui s'expriment suivant les relations suivantes :

$$kPe = (Pe - Ps_\infty)/(Pt - Ps_\infty) \tag{8}$$

ou encore :

$$kPe = 1-(V1\cos\alpha + V2 \sin \alpha)^2 \qquad (car\ \Phi=0) \qquad (9)$$

$$kPi = (Pi-Ps_\infty)/(Pt-Ps_\infty) \qquad (10)$$

ou encore :

$$kPi = 1-(V1\cos\alpha-V2 \sin\alpha)^2 \qquad (car\ \Phi=\pi) \qquad (11)$$

$$kPr1 = (Pr1-Ps_\infty)/(Pt-Ps_\infty) \qquad (12)$$

ou encore :

$$kPr1 = 1-(V'1 \cos \alpha)^2 - 0.5(V'2 \sin \alpha)^2 - 0,5(V'3 \sin \alpha)^2 \qquad (13)$$

Le coefficient kPr1 est calculé en effectuant la moyenne des coefficients des huit trous communicants entre eux pour former la prise PPr1.

Les composantes V'1, V'2 et V'3 de la vitesse de l'écoulement du fluide à la prise de pression PPr1 sont différentes des composantes V1, V2 et V3 de la vitesse de l'écoulement aux prises de pression PPe et PPi. En effet, la prise de pression PPr1 est située à une abscisse différente de celle des prises de pression PPe et PPi.

Les coefficients de pression kPe, kPi et kPr1 sont des fonctions périodiques de l'incidence $\alpha$ et ils sont de période $\pi$ du fait de la puissance de deux qui intervient dans les relations (9), (11 ) et (13).

Les trois capteurs de pression C1, C2, C3 sont associés aux prises de pression. C1 est un capteur différentiel qui mesure P1=Pe-Pr1. C2 est un capteur différentiel qui mesure P2=Pi-Pr1. C3 est un capteur absolu qui mesure P3=Pr1. Un choix différent peut être fait pour le type (différentiel/absolu) de capteurs.

Les moyens de calcul permettent de calculer le rapport :

$$(P1 - P2)/(P1 + P2)$$

qui s'exprime suivant les relations:

$$(P1 - P2)/(P1 + P2) = (Pe-Pi)/(Pe+Pi-2.Pr1)\ ou\ encore : \qquad (14)$$

$$(P1 - P2)/(P1 + P2) = (kPe-kPi)/(kPe+kPi-2.kPr1) \qquad (15)$$

Compte tenu des expressions de kPe, kPi et kPr1 en fonction de $\alpha$, le rapport (P1 - P2)/(P1 + P2) peut s'écrire sous la forme:

$$(P1 - P2)/(P1 + P2) = (a.\sin(2\alpha))/(b+c.\cos(2\alpha)) \qquad (16)$$

où a, b et c sont des constantes qui ne dépendent que de la position sur la sonde des prises de pression.

La connaissance du rapport (P1-P2)/(P1+P2) permet donc de calculer l'incidence $\alpha$. Mais la relation (16) correspond généralement à une fonction non linéaire de l'incidence $\alpha$ en fonction du rapport de pression. Pour une plage d'incidence limitée, cette fonction peut être rendue linéaire grâce à un choix judicieux des constantes a, b et c ; c'est-à-dire, grâce à un choix judicieux de la position sur la sonde des prises de pression. Un tel choix permet par exemple d'obtenir :

une non-linéarité moyenne (erreur quadratique) de +/- $10^{-3}$ sur une plage d'incidence de +/-40° lorsque c/b= 0,560825,

ou bien une non-linéarité moyenne (erreur quadratique) de +/-3x$10^{-3}$ sur une plage d'incidence de +/-50° lorsque c/b= 0,59998,

ou bien une non-linéarité moyenne (erreur quadratique) de +/-7,5x$10^{-3}$ sur une plage d'incidence de +/-60° lorsque c/b= 0,65422.

L'incidence étant une fonction quasi-linéaire du rapport de pression, elle peut être calculée avec une bonne précision. L'application numérique suivante illustre un mode particulier de réalisation de l'invention; les hypothèses de l'application sont les suivantes :

- le domaine de vol de l'aéronef s'étend de 0 à 257 m/s, ce qui correspond à 500 kt dans le système de mesure couramment utilisé en aéronautique,
- le domaine d'incidence du flux d'air est de +/-40° sur l'intervalle de vitesse compris entre 0 et 103 m/s, ce qui correspond à 200 kt dans le système de mesure couramment utilisé en aéronautique, et il est décroissant avec $V^2$ sur l'intervalle de vitesse compris entre 103 et 257 m/s, ce qui correspond respectivement à 200 et 500 kt dans le système de mesure couramment utilisé en aéronautique.

Les capteurs C1 et C2 doivent fonctionner sur l'intervalle qui s'étend de -32 à +350 hPa. En prenant comme autre contrainte que les capteurs C1 et C2 ont une précision de +/-0,25 hPa, le calcul de l'incidence $\alpha$, pour une vitesse de 51 m/s, ce qui correspond à 100 kt dans le système de mesure couramment utilisé en aéronautique, est donné avec une précision de :

0,75° pour $\alpha$=+/-40°
0,5° pour $\alpha$=+/-30°
0,3° pour $\alpha$=+/-20°
0,25 pour $\alpha$=0°

Connaissant l'incidence $\alpha$, les relations (9), (11) et (13) permettent de calculer les coefficients de pression kPe, kPi et kPr1. Les relations (8), (10) et (12) peuvent être combinées pour exprimer la pression dynamique (Pt-Ps$_\infty$), la pression statique Ps$_\infty$ et la pression totale Pt.
La pression dynamique est donnée par la relation :

$$(Pt-Ps_\infty)= (P1+P2)/(kPe+kPi-2kPr1) \tag{13}$$

La pression statique Ps$_\infty$ est donnée par la relation:

$$Ps_\infty=P3-kPr1\,(Pt-Ps_\infty) \tag{14}$$

La pression totale est donnée par la relation:

$$Pt=(Pt-Ps_\infty)+Ps_\infty \tag{15}$$

En remplaçant dans les équations (13), (14) et (15) les coefficients de pression kPe, kPi et kPr1 par leur valeur, ceci permet de déterminer la pression dynamique, la pression statique Ps$_\infty$ et la pression totale. Les pressions Pe et Pi sont obtenues en calculant respectivement P1+P3 et P2+P3.
En prenant un capteur C3 d'étendue de mesure de 0 à 1100 hPa, de précision +/- 0,25 hPa, les précisions sur les valeurs calculées pour une vitesse de 51 m/s, ce qui correspond à 100 kt dans le système de mesure couramment utilisé en aéronautique, deviennent :

- pour la pression dynamique calculée
    0,18 hPa pour $\alpha$=0°
    0,28 hPa pour $\alpha$=+/-40°
- pour la pression statique calculée Ps$_\infty$

0,14 hPa pour $\alpha=0°$
0,25 hPa pour $\alpha=+/-40°$

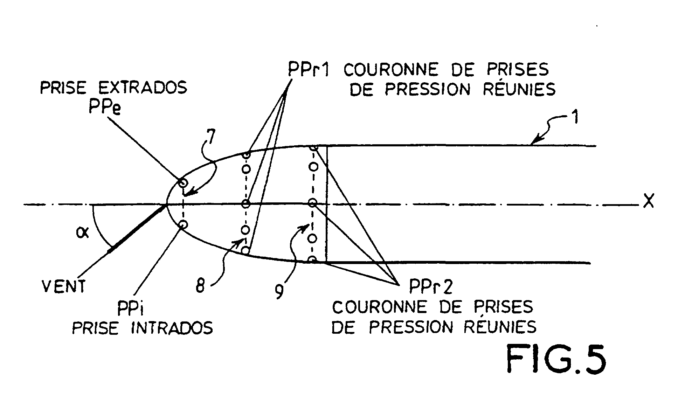

La figure 5 représente schématiquement, sur un diagramme, une disposition particulière des prises de pression du deuxième mode de réalisation d'une sonde selon l'invention. La sonde comporte, en outre des prises de pression déjà décrites dans le premier mode, une quatrième prise de pression PPr2 associée aux moyens de mesure de pression. Dans l'exemple retenu, les moyens de mesure de pression comprennent un quatrième capteur de pression C4. Le quatrième capteur C4 est choisi de même type que le troisième capteur C3.

La prise de pression PPr2 comporte, comme la prise PPr1, une couronne de trous communicants entre eux et situés dans une même section 9. Les trous de la prise PPr2 sont situés à une abscisse différente de celle des trous de la prise PPr1. L'abscisse des trous de la prise PPr2 est choisie de telle manière que le coefficient de pression kPr2 soit aussi différent que possible du coefficient de pression kPr1 pour la plage d'incidence utile. Les données fournies par le capteur C4 permettent d'effectuer une surveillance de la validité des informations. Cette surveillance se déroule de la façon suivante :

- une première valeur de $\alpha$, de $(Pt-Ps_\infty)$ et de $Ps_\infty$, ainsi que la valeur des pressions Pe et Pi sont calculées, comme décrit précédemment, à partir des informations fournies par les capteurs C1, C2 et C3. $\alpha.r.Ts$
- une seconde valeur de $\alpha$, de $(Pt-Ps_\infty)$ et de $Ps_\infty$ est calculée, à partir des valeurs de Pe et Pi calculées, et à partir de la pression mesurée par le capteur C4. Ces secondes valeurs sont comparées aux premières valeurs de $\alpha$, de $(Pt-Ps_\infty)$ et de $Ps_\infty$.

Le résultat de la comparaison permet de détecter un dysfonctionnement dans l'une des voies de mesure.

Dans le cas où la sonde comporte quatre prises de pression dans la première section, les deux prises supplémentaires permettent de calculer le dérapage de l'écoulement d'air. Ce calcul est effectué d'une manière similaire au calcul de l'incidence $\alpha$.

La sonde multifonctions décrite précédemment permet de déterminer la vitesse et l'incidence de l'écoulement d'air à partir de plusieurs prises de pression.

On sait par ailleurs que la vitesse réelle de l'avion dépend de la température statique Ts de l'écoulement d'air. Cette température étant difficile à mesurer, on mesure habituellement la température totale Tt de l'écoulement d'air dont on déduit la température statique Ts par l'équation suivante :

$$Tt = ( 1 + 0,2 \, M^2) \, Ts$$

où M représente le nombre de Mach. Le nombre de Mach est le rapport entre la vitesse de l'avion et la vitesse du son. Or la vitesse du son Vs est fonction de la température statique Ts de l'écoulement d'air :

$$Vs = \sqrt{\gamma.r.Ts}$$

équation dans laquelle:

$\gamma$ est une constante voisine de 1,4
r est la constante des gaz parfaits.

Le nombre de Mach se calcule quant à lui à partir de la pression statique $Ps_\infty$ et de la pression totale Pt déterminées précédemment :

$$M = \sqrt{5\left[\left(\frac{Pt}{Ps\infty}\right)^{2/7} - 1\right]}$$

Ainsi on peut déterminer la vitesse réelle de l'avion à partir de la pression totale Pt, de la pression statique $Ps_\infty$ ainsi que de la température totale Tt.

On réalise habituellement des sondes distinctes, une sonde comportant les prises de pression et une autre comportant des moyens de mesure de la température totale Tt.

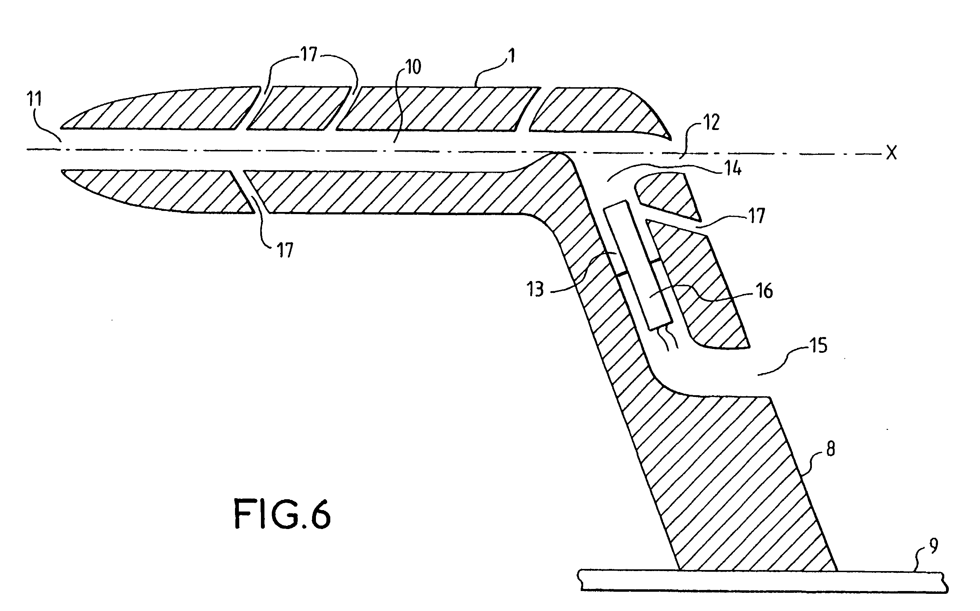

Conformément à l'invention, en réalisant une sonde multifonctions sans prise Pitot il est avantageux d'y adjoindre des moyens de mesure de la température totale Tt. Un exemple d'une telle sonde est décrit au moyen de la figure 6.

Sur cette figure, la sonde multifonctions comporte le corps 1 relié à une embase 8 s'écartant de l'axe X et dont la fonction est de maintenir la position du corps 1 par rapport à une peau 9 de l'avion. Pour simplifier la figure, les prises de pression PPr1, PPr2 et PPe ne sont pas représentées.

La sonde multifonctions comporte en outre des moyens pour mesurer la température totale de l'écoulement d'air.

Avantageusement, ces moyens comportent deux canaux dont un premier canal 10 comprenant un orifice d'entrée 11 faisant sensiblement face à l'écoulement d'air lorsque celui-ci est orienté suivant l'axe X. Le premier canal 10 comprend également un orifice de sortie 12 permettant à de l'air se trouvant dans le premier canal 10 de s'échapper en suivant la direction de l'axe X. Des particules susceptibles de circuler dans le premier canal 10 s'échappent sans venir en contact avec un capteur de température dont la position sera décrite ultérieurement. Ces particules sont par exemple formées de gouttes d'eau ou de poussières.

Le deuxième canal 13 comprenant des moyens pour mesurer la température totale de l'écoulement d'air comporte un orifice d'entrée 14 s'ouvrant dans le premier canal 10. Le deuxième canal 13 est par exemple sensiblement perpendiculaire au premier canal 10. Une partie de l'air circulant dans le premier canal 10, pénètre dans le second canal 13 par l'orifice d'entrée 14 et s'échappe du second canal 13 par un orifice de sortie 15 s'ouvrant sur l'extérieur vers l'arrière de l'embase 8.

Les moyens pour mesurer la température totale de l'écoulement d'air comportent en outre un capteur de température 16 situé à l'intérieur du deuxième canal 13. Le capteur de température 16 comporte par exemple un fil à base de platine bobiné formant une résistance électrique dont la valeur est variable en fonction de sa température. Le capteur de température 16 est fixé dans le deuxième canal 13 de façon à éviter au maximum tous transferts thermiques entre la structure du deuxième canal 13 et le capteur de température 16.

Les deux canaux 10 et 13 sont agencés de façon à ce que de l'air provenant de l'écoulement d'air circule dans le second canal 13 à faible vitesse. Cette vitesse doit être très inférieure à la vitesse du son dans l'écoulement tout en étant non nulle afin d'éviter que le capteur de température 16 ne prenne la température de la structure de l'embase 8 et notamment la température de la structure des deux canaux 10 et 13.

En effet, lorsque l'aéronef vole en haute altitude, la température de l'écoulement d'air peut être bien inférieure à zéro degré Celsius ce qui entraîne un risque de formation de givre sur la sonde multifonctions. Le givre peut notamment obstruer ces canaux 10 et 13 et donc empêcher toute mesure correcte de température.

Pour éviter la formation de givre, la palette mobile 1 comporte des moyens de dégivrage comprenant par exemple une résistance électrique chauffante disposée dans la structure de la palette. Ces moyens de dégivrage réchauffent la sonde multifonctions et par conséquent l'air qui circule dans les deux canaux 10 et 13. Pour éviter que le réchauffement d'air ne perturbe la mesure de température, on prévoit des orifices 17 d'évacuation de la couche limite de l'air circulant dans les deux canaux 10 et 13.

**Revendications**

1. Sonde multifonctions fixe pour aéronef pour mesurer les paramètres de l'écoulement du fluide en mouvement par rapport à la sonde, comprenant:

   - un corps (1) à symétrie de révolution autour d'un axe longitudinal (X), fermé par une calotte (5) arrondie, le corps étant placé dans l'écoulement,
   - au moins trois prises de pression (2) situées en des points déterminés du corps (1) et réparties dans différentes sections (7, 8, 9) pour prendre une première pression (Pe), une deuxième pression (Pi) et une troisième pression (Pr),
   - des moyens de mesure de pression (3) associés aux prises de pression (2) pour mesurer au moins autant de pressions P1, ..., Pn que de prises de pression (2),
   - des moyens de calcul (4) pour calculer la pression totale Pt de l'écoulement au niveau de la sonde, la pression statique à l'infini amont de la sonde $Ps_\infty$ et la pression dynamique $Pt-Ps_\infty$ à partir des coefficients de pression kP des prises de pression,

   **caractérisée en ce que** les moyens de calcul (4) permettent de calculer l'incidence locale $\alpha$ de l'écoulement en exprimant un rapport déterminé de pressions mesurées en fonction de l'incidence locale $\alpha$ sous la forme :

$$\frac{P1 - P2}{P1 + P2} = \frac{A + B.\cos 2\alpha + C.\sin 2\alpha}{D + E.\cos 2\alpha + F.\sin 2\alpha}$$

avec A, B, C, D, E, F des constantes dépendant uniquement des coordonnées $(x_e, x_i, x_n, \phi_e, \phi_i, \phi_r)$ des prises de pression, la position déterminée des prises de pression étant telle que l'expression du rapport en fonction de l'incidence locale $\alpha$ est quasi linéaire.

2. Sonde multifonctions fixe selon la revendication 1, **caractérisée en ce que** chaque section (7, 8, 9) est perpendiculaire à l'axe longitudinal (X) du corps (1 ) de la sonde.

3. Sonde multifonctions fixe selon la revendication 2, **caractérisée en ce qu'**elle comprend :

- trois prises de pression (2) réparties en

  • deux prises de pression (PPe, PPi) disposées dans une première section (7) et disposées dans le plan d'incidence et diamétralement opposées l'une de l'autre pour prendre une première pression Pe et une deuxième pression Pi,
  • une prise de pression (PPr1) de référence disposée dans une deuxième section (8) et constituée d'une couronne de trous de préférence régulièrement espacés et communicants entre eux pour établir une pression moyenne Pr1.

4. Sonde multifonctions fixe selon la revendication 3, **caractérisée en ce qu'**elle comprend :

  • une quatrième prise de pression (PPr2) disposée dans une troisième section (9), distincte de la première (7) et de la deuxième (8) sections, et constituée d'une couronne de trous de préférence régulièrement espacés et communicants entre eux pour établir une pression moyenne Pr2,

  et **en ce que** les moyens de calcul (4) calculent une seconde valeur de l'incidence locale $\alpha$, de la pression dynamique $Pt-Ps_\infty$ et de la pression statique $Ps_\infty$ pour valider par comparaison les valeurs calculées.

5. Sonde multifonctions fixe selon l'une quelconque des revendications 3 et 4, **caractérisée en ce que** la prise de pression (PPr1) disposée dans la deuxième section (8) comprend huit trous séparés entre eux d'un angle de 45°.

6. Sonde multifonctions fixe selon l'une quelconque des revendications 4 et 5, **caractérisée en ce que** la quatrième prise de pression (PPr2) comprend huit trous séparés entre eux d'un angle de 45°.

7. Sonde multifonctions fixe selon l'une quelconque des revendications 3 à 6, **caractérisée en ce que** les moyens de mesure de pression (3) mesurent une première pression différentielle P1=Pe-Pr1 et une deuxième pression différentielle P2 = Pi - Pr1 entre la première (7) et la deuxième (8) sections, et une pression absolue P3 = Pr1 au niveau de la prise de référence (PPr1).

8. Sonde multifonctions fixe selon la revendication 7, **caractérisée en ce que** les moyens de calcul (4) calculent les paramètres de l'écoulement à partir des relations :

  •
  $$(P1 - P2)/(P1 + P2) = (a.\sin(2\alpha))/(b+c.\cos(2\alpha)),$$

  dans laquelle a, b et c sont des constantes dépendant uniquement de la position sur la sonde des prises de pression,

  •
  $$(Pt-Ps_\infty)= (P1+P2)/(kPe+kPi-2kPr1),$$

  dans laquelle $kPe = 1-(V1\cos\alpha + V2\sin\alpha)^2$, $kPi = 1-(V1\cos\alpha-V2\sin\alpha)^2$, $kPr1= 1-(V'1\cos\alpha)^2 - 0.5(V'2\sin\alpha)^2 - 0,5(V'3\sin\alpha)^2$ et, V1, V2 et V3 sont les composantes de la vitesse de l'écoulement au niveau de la première section et, V'1, V'2 et V'3 sont les composantes de la vitesse de l'écoulement au niveau de la deuxième section,

**EP 1 175 622 B1**

- $$Ps_\infty = P3 - kPr1 (Pt-Ps_\infty)$$

  et

- $$Pt = (Pt - Ps_\infty) + Ps_\infty.$$

9. Sonde multifonctions fixe selon l'une des revendications précédentes, **caractérisée en ce qu'**elle comprend en outre des moyens (10, 13,16) pour mesurer la température totale de l'écoulement d'air.

10. Sonde selon la revendication 9, **caractérisée en ce que** les moyens pour mesurer la température totale comportent :

   - un premier canal (10) comprenant un orifice d'entrée (11) d'air faisant sensiblement face à l'écoulement d'air et un orifice de sortie (12) d'air ;
   - un second canal (13) dont l'entrée (14) d'air est située dans le premier canal (10) ;
   - un capteur de température (16) fixé dans le second canal (13).

11. Sonde selon la revendication 10, **caractérisée en ce que** les deux canaux (10, 13) comportent une pluralité d'orifices (17) permettant d'évacuer, vers l'extérieur de la sonde, la couche limite de l'air circulant dans les canaux (10, 13).

**Claims**

1. Fixed multifunction probe for aircraft for measuring the flow parameters of the fluid moving with respect to the probe, comprising:

   - a body (1) having symmetry of revolution about a longitudinal axis (X), closed by a rounded cap (5), the body being placed in the flow,
   - at least three pressure taps (2) situated at specified points of the body (1) and distributed in various sections (7, 8, 9) so as to tap a first pressure (Pe), a second pressure (Pi) and a third pressure (Pr),
   - pressure measurement means (3) associated with the pressure taps (2) for measuring at least as many pressures P1, ..., Pn as pressure taps (2),
   - calculation means (4) for calculating the total pressure Pt of the flow at the level of the probe, the static pressure at upstream infinity of the probe $Ps_\infty$ and the dynamic pressure $Pt-Ps_\infty$ from the pressure coefficients kP of the pressure taps, **characterized in that** the calculation means (4) make it possible to calculate the local angle of attack $\alpha$ of the flow by expressing a specified ratio of measured pressures as a function of the local angle of attack $\alpha$ in the form:

   $$\frac{P1 - P2}{P1 + P2} = \frac{A + B.\cos 2\alpha + C.\sin 2\alpha}{D + E.\cos 2\alpha + F.\sin 2\alpha}$$

   A, B, C, D, E, F being constants dependent solely on the coordinates ($X_e$, $X_i$, $X_n$, $\phi_e$, $\phi_i$, $\phi_r$) of the pressure taps, the specified position of the pressure taps being such that the expression for the ratio as a function of the local angle of attack $\alpha$ is quasi linear.

2. Fixed multifunction probe according to Claim 1, **characterized in that** each section (7, 8, 9) is perpendicular to the longitudinal axis (X) of the body (1) of the probe.

3. Fixed multifunction probe according to Claim 2, **characterized in that** it comprises:

   - three pressure taps (2) distributed as

     - two pressure taps (PPe, PPi) arranged in a first section (7) and arranged in the plane of attack and diametrically opposite one another so as to tap a first pressure Pe and a second pressure Pi,
     - a reference pressure tap (PPr1) arranged in a second section (8) and consisting of a ring of preferably regularly spaced holes intercommunicating so as to establish a mean pressure Pr1.

4. Fixed multifunction probe according to Claim 3, **characterized in that** it comprises:

- a fourth pressure tap (PPr2) arranged in a third section (9), separate from the first (7) and from the second (8) sections, and consisting of a ring of preferably regularly spaced holes intercommunicating so as to establish a mean pressure Pr2,

and **in that** the calculation means (4) calculate a second value of the local angle of attack $\alpha$, of the dynamic pressure $Pt\text{-}Ps_\infty$ and of the static pressure $Ps_\infty$ so as to validate the calculated values by comparison.

5. Fixed multifunction probe according to either one of Claims 3 and 4, **characterized in that** the pressure tap (PPr1) arranged in the second section (8) comprises eight holes separated from one another by an angle of 45°.

6. Fixed multifunction probe according to either one of Claims 4 and 5, **characterized in that** the fourth pressure tap (PPr2) comprises eight holes separated from one another by an angle of 45°.

7. Fixed multifunction probe according to any one of Claims 3 to 6, **characterized in that** the pressure measurement means (3) measure a first differential pressure P1 = Pe - Pr1 and a second differential pressure P2 = Pi - Pr1 between the first (7) and the second (8) sections, and an absolute pressure P3 = Pr1 at the level of the reference tap (PPr1).

8. Fixed multifunction probe according to Claim 7, **characterized in that** the calculation means (4) calculate the flow parameters from the relations:

- $$(P1 - P2)/(P1 + P2) = (a.\sin(2\alpha))/(b+c.\cos(2\alpha)),$$

in which a, b and c are constants dependent solely on the position of the pressure taps on the probe,

- $$(Pt\text{-}Ps_\infty)=(P1+P2)/(kPe+kPi\text{-}2kPr1),$$

in which $kPe = 1\text{-}(V1\cos\alpha + V2\sin\alpha)^2$, $kPi = 1\text{-}(V1\cos\alpha - V2\sin\alpha)^2$, $kPr1 = 1\text{-}(V'1\cos\alpha)^2 - 0.5(V'2\sin\alpha)^2 - 0.5(V'3\sin\alpha)^2$ and V1, V2 and V3 are the components of the velocity of the flow at the level of the first section and, V'1, V'2 and V'3 are the components of the velocity of the flow at the level of the second section,

- $$Ps_\infty = P3 - kPr1 (Pt\text{-}Ps_\infty)$$

and

- $$Pt = (Pt - Ps_\infty) + Ps_\infty.$$

9. Fixed multifunction probe according to one of the preceding claims, **characterized in that** it furthermore comprises means (10, 13, 16) for measuring the total temperature of the air flow.

10. Probe according to Claim 9, **characterized in that** the means for measuring the total temperature comprise:

- a first channel (10) comprising an air inlet orifice (11) substantially facing the air flow and an air outlet orifice (12);
- a second channel (13) whose air inlet (14) is situated in the first channel (10);
- a temperature sensor (16) fixed in the second channel (13).

11. Probe according to Claim 10, **characterized in that** the two channels (10, 13) comprise a plurality of orifices (17) making it possible to remove, toward the outside of the probe, the boundary layer of the air circulating through the channels (10, 13).

**Patentansprüche**

1. Feste Multifunktionssonde für ein Luftfahrzeug zur Messung der Strömungsparameter des bezüglich der Sonde in Bewegung befindlichen Fluids, die aufweist:

- einen um eine Längsachse (X) drehsymmetrischen Körper (1), der von einer abgerundeten Kappe (5) verschlossen wird,

wobei der Körper in der Strömung angeordnet ist,

- mindestens drei Druckmessstellen (2), die sich an bestimmten Punkten des Körpers (1) befinden und auf unterschiedliche Teilabschnitte (7, 8, 9) verteilt sind, um einen ersten (Pe), einen zweiten (Pi) und einen dritten Druckwert (Pr) zu erfassen,
- Druckmesseinrichtungen (3), die den Druckmessstellen (2) zugeordnet sind, um zumindest so viele Drücke P1, .... Pn zu messen, wie Druckmessstellen (2) vorhanden sind,
- Rechenmittel (4), um den Gesamtdruck Pt der Strömung in Höhe der Sonde, den statischen Druck $Ps_\infty$ im Unendlichen stromaufwärts vor der Sonde und den dynamischen Druck $Pt-Ps_\infty$ ausgehend von Druckkoeffizienten kP der Druckmessstellen zu berechnen,

**dadurch gekennzeichnet, dass** die Rechenmittel (4) es ermöglichen, den lokalen Einfallswinkel $\alpha$ der Strömung zu berechnen, indem ein bestimmtes Verhältnis gemessener Drücke in Abhängigkeit vom lokalen Einfallswinkel $\alpha$ in folgender Form ausgedrückt wird:

$$\frac{P1 - P2}{P1 + P2} = \frac{A + B\cdot\cos 2\alpha + C\cdot\sin 2\alpha}{D + E\cdot\cos 2\alpha + F\cdot\sin 2\alpha}$$

wobei A, B, C, D, E, F Konstanten sind, die nur von den Koordinaten ($x_e$, $x_i$, $x_n$, $\phi_e$, $\phi_i$, $\phi_n$) der Druckmessstellen abhängen, wobei die bestimmte Stellung der Druckmessstellen so ist, dass der Ausdruck des Verhältnisses in Abhängigkeit vom lokalen Einfallswinkel $\alpha$ praktisch linear ist.

2. Feste Multifunktionssonde nach Anspruch 1, **dadurch gekennzeichnet, dass** jeder Teilabschnitt (7, 8, 9) senkrecht zur Längsachse (X) des Körpers (1) der Sonde liegt.

3. Feste Multifunktionssonde nach Anspruch 2, **dadurch gekennzeichnet, dass** sie aufweist:

- drei Druckmessstellen (2), die aufgeteilt sind in

  * zwei Druckmessstellen (PPe, PPi), die in einem ersten Teilabschnitt (7) und in der Einfallsebene und einander diametral entgegengesetzt angeordnet sind, um einen ersten Pe und einen zweiten Druckwert Pi zu erfassen,
  * eine Bezugs-Druckmessstelle (PPr1), die in einem zweiten Teilabschnitt (8) angeordnet ist und aus einem Kranz von Löchern besteht, die vorzugsweise regelmäßig beabstandet sind und miteinander in Verbindung stehen, um einen mittleren Druck Pr1 aufzubauen.

4. Feste Multifunktionssonde nach Anspruch 3, **dadurch gekennzeichnet, dass** sie aufweist:

  * eine vierte Druckmessstelle (PPr2), die in einem dritten Teilabschnitt (9) getrennt vom ersten (7) und vom zweiten Teilabschnitt (8) angeordnet ist und aus einem Kranz von Löchern besteht, die vorzugsweise regelmäßig beabstandet sind und miteinander in Verbindung stehen, um einen mittleren Druck Pr2 aufzubauen,

und dass die Rechenmittel (4) einen zweiten Wert des lokalen Einfallswinkels $\alpha$, des dynamischen Drucks $Pt-Ps_\infty$ und des statischen Drucks $Ps_\infty$ berechnen, um durch Vergleich die berechneten Werte zu bewerten.

5. Feste Multifunktionssonde nach einem der Ansprüche 3 und 4, **dadurch gekennzeichnet, dass** die im zweiten Teilabschnitt (8) angeordnete Druckmessstelle (PPr1) acht Löcher aufweist, die voneinander um einen Winkel von 45° getrennt sind.

6. Feste Multifunktionssonde nach einem der Ansprüche 4 und 5, **dadurch gekennzeichnet, dass** die vierte Druckmessstelle (PPr2) acht Löcher aufweist, die voneinander um einen Winkel von 45° getrennt sind.

7. Feste Multifunktionssonde nach einem der Ansprüche 3 bis 6, **dadurch gekennzeichnet, dass** die Druckmesseinrichtungen (3) einen ersten Differentialdruck P1=Pe-Pr1 und einen zweiten Differentialdruck P2=Pi-Pr1 zwischen dem ersten (7) und dem zweiten Teilabschnitt (8) und einen Absolutdruck P3=Pr1 in Höhe der Bezugs-Messstelle (PPr1) messen.

8.  Feste Multifunktionssonde nach Anspruch 7, **dadurch gekennzeichnet, dass** die Rechenmittel (4) die Strömungsparameter ausgehend von den folgenden Beziehungen berechnen:

- 
$$(P1-P2)/(P1+P2) = (a \cdot \sin(2\alpha))/(b+c \cdot \cos(2\alpha)),$$

in der a, b und c Konstanten sind, die nur von der Stellung der Druckmessstellen auf der Sonde abhängen,

- 
$$(Pt-Ps_\infty)=(P1+P2)/(kPe+kPi-2kPr1),$$

in der $kPe=1-(V1\cos\alpha+V2\sin\alpha)^2$, $kPi=1-(V1\cos\alpha-V2\sin\alpha)^2$, $kPr1=1-(V'1\cos\alpha)^2-0,5(V'2\sin\alpha)^2-0,5(V'3\sin\alpha)^2$ und V1, V2 und V3 die Komponenten der Geschwindigkeit der Strömung in Höhe des ersten Teilabschnitts, und V'1, V'2 und V'3 die Komponenten der Geschwindigkeit der Strömung in Höhe des zweiten Teilabschnitts sind,

- 
$$Ps_\infty=P3-kPr1(Pt-Ps_\infty)$$

und

- 
$$Pt= (Pt-Ps_\infty) +Ps_\infty.$$

9.  Feste Multifunktionssonde nach einem der vorhergehenden Ansprüche, **dadurch gekennzeichnet, dass** sie außerdem Mittel (10, 13, 16) aufweist, um die Gesamttemperatur der Luftströmung zu messen.

10. Sonde nach Anspruch 9, **dadurch gekennzeichnet, dass** die Mittel zur Messung der Gesamttemperatur aufweisen:

-   einen ersten Kanal (10) mit einer Lufteingangsöffnung (11), die im Wesentlichen gegenüber der Luftströmung liegt, und mit einer Luftaustrittsöffnung (12);
-   einen zweiten Kanal (13), dessen Lufteingang (14) im ersten Kanal (10) liegt;
-   einen Temperaturfühler (16), der im zweiten Kanal (13) befestigt ist.

11. Sonde nach Anspruch 10, **dadurch gekennzeichnet, dass** die beiden Kanäle (10, 13) mehrere Öffnungen (17) aufweisen, die es ermöglichen, die Grenzschicht der in den Kanälen (10, 13) zirkulierenden Luft nach außerhalb der Sonde abzuführen.

**FIG.1**

MOYENS DE MESURE DE PRESSION

PRISES DE PRESSION

MOYENS DE CALCUL

$P1, ....., Pn$

$C1, ........, CN$

$Pi, Pe, Pr$

**FIG.2**

$PPr$

$\phi_e$

$PPe$

$\phi_i$

$\phi_r$

$x_e$

$x_i$

$x_r$

$\alpha$

$\vec{V}$

$PPi$

$X$

EP 1 175 622 B1

$Z$

$V3 \sin \alpha \sin \phi$

6

$V2 \sin \alpha \cos \phi$

$V1 \cos \alpha$

1

$\phi$

$V \sin \alpha$

$\vec{V}$

$X$

$V \cos \alpha$

# FIG.3

PPr1 COURONNE DE PRISES
DE PRESSION RÉUNIES

PRISE EXTRADOS
PPe

7

1

$X$

$\alpha$

VENT

8

PPi
PRISE INTRADOS

# FIG.4

FIG.5

FIG.6

EP 1 175 622 B1